# EUROPEAN PATENT APPLICATION

(11) **EP 4 358 456 A2**
(43) Date of publication of application: **24.04.2024**
(21) Application number: 23200276.6
(22) Date of filing: 28.09.2023
(51) Int. Cl.: H04L 5/00

(54) **TRANSMISSION METHODS OF SIDELINK ON UNLICENSED SPECTRUM**

(30) Priority: 30.09.2022 WO PCT/CN2022/123392; 20.09.2023 CN 202311223057
(71) Applicant: MediaTek Singapore Pte. Ltd., Singapore 138628 (SG)
(72) Inventor: CHENG, Junqiang, Beijing (CN); CHEN, Tao, Beijing (CN)
(74) Representative: Patentship Patentanwaltsgesellschaft mbH

(57) **Abstract**

Apparatus and methods are provided for sidelink (SL) transmission in SL unlicensed frequency bands (SL-U). In one novel aspect, one and/or multiple starting symbols within a slot is supported for SL-U to start a transmission. In one embodiment, the physical sidelink control channel (PSCCH) is configured to be transmitted on each starting symbol within a slot. In another embodiment, only physical sidelink shared channel (PSSCH) is transmitted on the starting symbols other than the first starting symbol within a slot. In one novel aspect, PSCCH is transmitted within one sub-channel. In one embodiment, the PSCCH is transmitted on a fixed subchannel of each RB set of the occupied BWP. In another embodiment, the PSCCH is transmitted on a fixed subchannel of one preconfigured RB set. In another novel aspect, the UE sets the CAPC value to be one for the physical sidelink feedback channel (PSFCH).

## Description

### TECHNICAL FIELD

The disclosed embodiments relate generally to wireless communication, and, more particularly, to transmission for sidelink communication on unlicensed spectrum.

### BACKGROUND

Sidelink (SL) communication was introduced to enable direct transmission between two user equipment (UEs), which is also known as the device-to-device (D2D) communications. With the development of 3GPP normative works, the scenarios of sidelink extended to UE-to-network relay, public safety, vehicle-to-everything (V2X) communications and so on. The critical role of sidelink in long term evolution (LTE) and the new radio (NR) has made it an inevitable remedy to support diverse use cases of future wireless communications.

To meet the increased demands of wireless data traffic, using unlicensed frequency bands has drawn a lot of attention in the wireless industry to improve the capacity of future wireless communication systems. The utilization of unlicensed spectrum for sidelink communications is regarded as the most promising direction for further development of sidelink communication. To occupy the unlicensed frequency bands for sidelink (SL-U) transceiving, the UE must perform channel sensing, such as listen-before-talk (LBT) procedure. The sensing procedure poses additional requirement for the sidelink transceiving and requires the SL-U resource allocation, usages, and configurations to be more efficient.

Improvements and enhancements are required for sidelink resource allocation and resource usage in unlicensed frequency bands.

### SUMMARY

Apparatus and methods are provided for sidelink (SL) transmission in SL unlicensed frequency bands (SL-U). In one novel aspect, one and/or multiple starting symbols within a slot is supported for SL-U to start a transmission. In one embodiment, the physical sidelink control channel (PSCCH) is configured to be transmitted on each starting symbol within a slot. In another embodiment, only physical sidelink shared channel (PSSCH) is transmitted on the starting symbols other than the first starting symbol within a slot. In one embodiment, the control indicator indicates the PSSCH in a current full slot when PSCCH is preconfigured to start at any candidate starting symbol within a slot. In another embodiment, the control indicator indicates the PSSCH in a past partial slot when the PSCCH is preconfigured to only start at a first starting symbol within a slot. In one embodiment, the control indicator is carried in at least one of control information comprising a first sidelink control information (SCI), and a second SCI. In another embodiment, the control indicator further indicates one or more elements comprising: symbol length, repetition configuration, combining configuration, and PSSCH demodulation reference signal (DMRS).

In one novel aspect, PSCCH is transmitted within one sub-channel. In one embodiment, the PSCCH is transmitted on a fixed subchannel of each RB set of the occupied BWP. In another embodiment, the PSCCH is transmitted on a fixed subchannel of one preconfigured RB set. In one embodiment, the one preconfigured RB set is the lowest RB set occupied by the UE.

In another novel aspect, the UE establishes SL connection with another device in SL-U, performs LBT, and sets the CAPC value to be one for the physical sidelink feedback channel (PSFCH). In one embodiment, type-1 channel access is performed for the PSFCH.

More specifically, a first aspect of the invention relates to a method for a user equipment (UE), comprising: determining a bandwidth part (BWP) for a sidelink (SL) transceiving on unlicensed bands (SL-U), wherein the BWP is configured with one or more resource block (RB) sets each with multiple subchannels; preparing a physical sidelink shared channel (PSSCH) transmission on one or more RB sets to communicate with a second UE through an SL connection; and transmitting or receiving a physical sidelink control channel (PSCCH) of the corresponding PSSCH at a subset of the one or more RB sets occupied by the PSSCH transmission. In a first embodiment of the first aspect, the PSCCH is transmitted on a lowest subchannel of each RB set of the corresponding PSSCH, or the PSCCH is transmitted on a lowest subchannel of a lowest RB set of the corresponding PSSCH. In a second embodiment of the first aspect, the method further comprises: detecting a PSCCH by the UE based on the PSCCH location regarding the corresponding PSSCH. In a third embodiment of the first aspect, one or more positions for PSCCH are further determined based on a channel occupancy time (COT) indication, wherein the PSCCH is for an in-COT operation, and the PSCCH starts from a sub-channel of one RB set or across multiple RB sets of the corresponding PSSCH scheduled by a COT initiator UE.

A second aspect of the invention relates to a method for a user equipment (UE), comprising: determining a first starting symbol and a second starting symbol within a slot for an SL transceiving in a wireless network, wherein the SL transceiving is on unlicensed frequency bands (SL-U); performing a channel access procedure before the SL-U transceiving; and transmitting or receiving a physical sidelink control channel (PSCCH) at the first starting symbol or the second starting symbol within the slot upon success of the channel access procedure. In a first embodiment of the second aspect, transmitting the PSCCH on the first starting symbol within the slot, and the SL transceiving on the first starting symbol further includes a physical sidelink shared channel (PSSCH) transmission. In a second embodiment of the second aspect, the SL transceiving on the second starting symbol within the slot includes the PSCCH and a PSSCH transmission. In a third embodiment of the second aspect, the SL transceiving on the second starting symbol within the slot includes a PSSCH transmission only. In a fourth embodiment of the second aspect, the PSCCH and a PSSCH transmission on the second starting symbol is a TB different from the TB transmitted in the following full slot, or the PSCCH and the PSSCH transmission on the second starting symbol is a repetition of a sub-set of the TB transmitted in the following full slot. In a fifth embodiment of the second aspect, the PSCCH is preconfigured to include a control indicator, the control indicator indicates the PSSCH in a partial slot where the channel access procedure is finished. In a sixth embodiment of the second aspect, the PSCCH is preconfigured to include a control indicator, the control indicator indicates the PSSCH in both a partial slot where the channel access procedure is finished and the PSSCH in a following full slot. In a seventh embodiment of the second aspect, at least one starting symbol is used for automatic gain control (AGC) purpose. In an eighth embodiment of the second aspect, the UE monitors each starting symbol within the slot for PSCCH detection, or the UE stops monitoring following starting symbols in a slot upon successful detecting a former PSCCH within the slot.

A third aspect of the invention relates to a method for a user equipment (UE), comprising: establishing, by the UE, a sidelink (SL) connection on unlicensed frequency bands (SL-U) for an SL-U transceiving in a wireless network; performing a Type 1 channel access procedure before a transmission for a physical sidelink feedback channel (PSFCH) without a shared channel occupancy time (COT), and one of Type 2A/2B/2C channel access procedure before a transmission for a PSFCH with a shared COT; and transmitting the PSFCH upon success of the channel access procedure. In a first embodiment of the third aspect, a channel access priority class (CAPC) for Type 1 channel access is configured as 1.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates a schematic system diagram illustrating an exemplary wireless network for sidelink data communication in unlicensed frequency bands in accordance with embodiments of the current invention.
Figure 2 illustrates exemplary diagrams for starting symbol configuration with multiple starting symbols and PSSCH handling in accordance with embodiments of the current invention.
Figure 3 illustrates exemplary diagrams of starting symbol configurations and corresponding control indications in accordance with embodiments of the current invention.
Figure 4 illustrates exemplary diagrams sub-channel and RB set configuration for PSCCH for a UE configured with occupied BWP for SL-U transceiving in accordance with embodiments of the current invention.
Figure 5 illustrates exemplary diagrams PSCCH configuration with one or more RB sets in an occupied BWP for the UE for the SL-U transceiving in accordance with embodiments of the current invention.
Figure 6 illustrates an exemplary diagram for the PSFCH configuration for SL-U transceiving in accordance with embodiments of the current invention.
Figure 7 illustrates an exemplary flow chart for the UE configuring PSCCH with occupied BWP for the SL-U transceiving in accordance with embodiments of the current invention.
Figure 8 illustrates an exemplary flow chart for UE configuring PSSCH with multiple starting symbols for the SL-U transceiving in accordance with embodiments of the current invention.
Figure 9 illustrates an exemplary flow chart for the UE configuring PSFCH for the SL-U transceiving in accordance with embodiments of the current inventions.

### DETAILED DESCRIPTION

Reference will now be made in detail to some embodiments of the invention, examples of which are illustrated in the accompanying drawings.

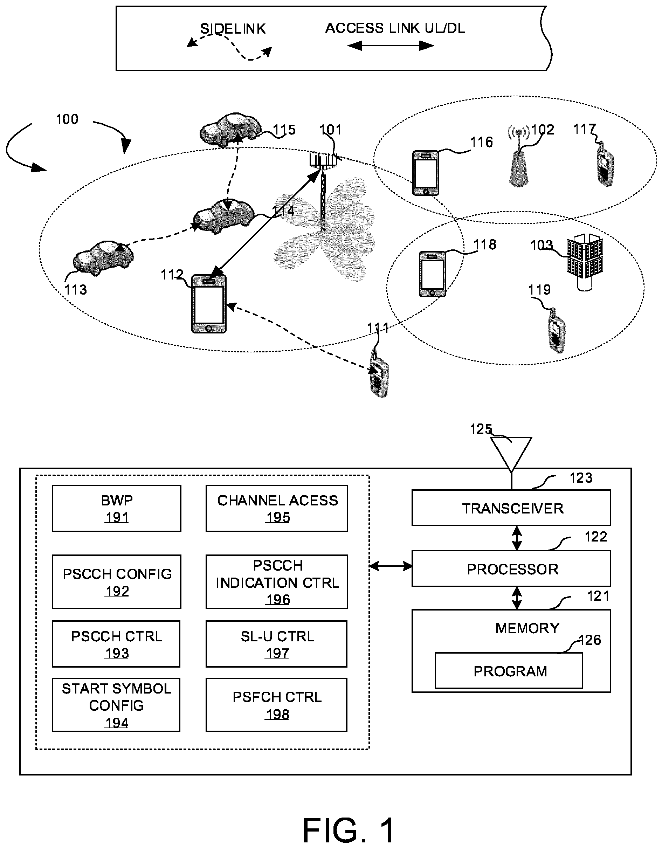

Figure 1 illustrates a schematic system diagram illustrating an exemplary wireless network for sidelink data communication in unlicensed frequency bands in accordance with embodiments of the current invention. Wireless network 100 includes multiple communication devices or mobile stations, such as user equipment (UEs) 111, 112, 113, 114, and 115, which are configured with sidelink in unlicensed frequency bands. The exemplary mobile devices in wireless network 100 have sidelink capabilities. Sidelink communications refer to the direct communications between terminal nodes or UEs without the data going through the network. For example, UE 113 communicates with UE 114 directly without going through links with the network units. The scope of sidelink transmission also supports UE-to-network relay to extend the service range of an eNB/gNB, where the in-coverage UE acts as the relay node between an eNB/gNB and an out-of-coverage UE. For example, UE 112 is connected with base station 101 through an access link. UE 112 provides network access for out-of-coverage UE 111 through sidelink relay. The base station, such as base station 101, may also be referred to as an access point, an access terminal, a base station, a Node-B, an eNode-B (eNB), a gNB, or by other terminology used in the art. The network can be a homogeneous network or heterogeneous network, which can be deployed with the same frequency or different frequencies. Base station 101 is an exemplary base station. With the demands for more capacity and the development of sidelink communication, it is important for the sidelink devices to use the unlicensed frequency bands and be harmoniously coexistence with devices with other RATs operating in the same unlicensed frequency bands. For example, neighboring UEs 116 and 117 communicate with base station 102 through other RATs, such as Wi-Fi, sharing the same unlicensed frequency band. Neighboring UEs 118 and 119 communicate with base station 103 through other RATs, such as NR, sharing the same unlicensed frequency band.

For sidelink (SL) transmitted on unlicensed spectrum (SL-U), in time domain, considering the channel access operation, such as LBT, may succeed in the middle of the slot. For legacy NR-U, the gNB/UE can access the channel at symbol-level after the channel access is finished, which can improve the channel access efficiency when it competes with other RAT(s), e.g., WiFi. For legacy SL, the minimum unit for scheduling is a slot, which means even if the LBT is finished within a slot, the transmission can only be started at the next slot boundary. The gap between the LBT end position and the transmission start position increase the risk of COT loosing. That is the motivation of introducing additional starting symbol(s) within a slot for SL-U to improve its channel access opportunity. Correspondingly, the essential enhanced mechanisms (e.g., slot structure, PSCCH/PSSCH channel) need to be re-designed to better support SL-U.

Figure 1 further illustrates simplified block diagrams of a mobile device/UE for operating in the unlicensed frequency band. UE 111 has an antenna 125, which transmits and receives radio signals. An RF transceiver circuit 123, coupled with the antenna, receives RF signals from antenna 125, converts them to baseband signals, and sends them to processor 122. In one embodiment, the RF transceiver may comprise two RF modules (not shown). RF transceiver 123 also converts received baseband signals from processor 122, converts them to RF signals, and sends out to antenna 125. Processor 122 processes the received baseband signals and invokes different functional modules to perform features in UE 111. Memory (or storage medium or computer-readable medium) 121 stores program instructions and data 126 to control the operations of UE 111. Antenna 125 sends uplink transmission and receives downlink transmissions to/from base stations.

UE 111 also includes a set of control modules that carry out functional tasks. UE 111 may only include a subset of the control modules to perform one or more functional tasks. These control modules can be implemented by circuits, software, firmware, or a combination of them. A bandwidth part (BWP) module 191 determines a BWP for a sidelink (SL) transceiving on unlicensed bands (SL-U), wherein the BWP is configured with one or more resource block (RB) sets each with multiple subchannels. PSCCH configuration module 192 prepares a physical sidelink control channel (PSCCH) transmission on one or more RB sets to communicate with a second UE through an SL connection. PSCCH controller 193 transmits the PSCCH at one or more preconfigured locations based on an occupied BWP configuration, wherein a subset or a whole RB sets of the configured BWP is occupied by the UE. Starting symbol configuration module 194 determines multiple candidate starting symbols within a slot for an SL transceiving in a wireless network, wherein the SL transceiving is on unlicensed bands. In one embodiment, the starting symbols are determined based on the network configuration. In another embodiment, the starting symbols are determined by the UE. In one embodiment, the configuration module 194 determines the first candidate starting symbol and the second candidate starting symbol within a slot for an SL transceiving in a wireless network, wherein the SL transceiving is on unlicensed frequency bands (SL-U). Channel access module 195 performs channel access before the SL-U transceiving. PSCCH indication controller 196 transmits physical sidelink control channel (PSCCH) at a preconfigured starting symbol upon success of the channel access procedure, wherein a control indicator indicates a physical sidelink shared channel (PSSCH) starting position based on a preconfigured starting symbol for the PSCCH. SL-U controller 197 establishes SL connection for an SL-U transceiving in a wireless network. PSFCH controller 198 configures a CAPC value for the PSFCH to be one and transmits the PSFCH upon success of the channel access.

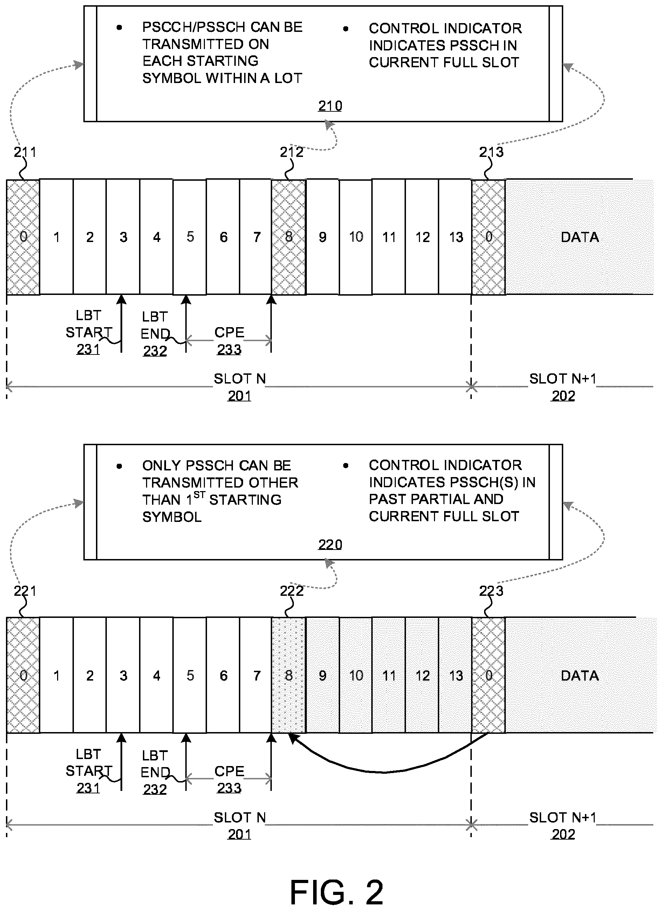

Figure 2 illustrates exemplary diagrams for starting symbol configuration with multiple starting symbols and PSSCH handling in accordance with embodiments of the current invention. In one novel aspect, one or multiple starting symbols within a slot are supported for SL-U. Exemplary symbol #0 and #8 are configured as candidate starting symbols. Exemplary slot N 201 has fourteen symbols. In slot N 201, starting symbols 211 and 212 are configured. The next slot following slot N 201 is Slot N+1 202. Similarly, symbols #0 (213) and #8 (not shown) are configured as starting symbols. At step 231, LBT starts at symbol #3 in slot N 201. At step 232, at symbol #5 in slot N 201, the LBT ended/succeeded. In one embodiment, cyclic prefix extension (CPE) 233 is transmitted between the end of the LBT success and the next starting symbol. CPE operation can be implemented to achieve us-to-symbol boundary alignment, thus SL-U UE can start a transmission on the channel as soon as the LBT procedure is finished. In one embodiment, at least one starting symbol is used for automatic gain control (AGC) purpose.

In one embodiment 210, PSCCH can be transmitted on each starting symbol within a slot. In one embodiment, PSCCH is preconfigured to start at any candidate starting symbol within a slot that is closest to the success of the LBT procedure. For example, PSCCH can start on symbols 211, 212, and 213. At the end of CPE, on the second starting symbol 212 of slot N 201, PSCCH can be transmitted. The control indicator can indicate the PSSCH in current full slot.

In another embodiment 220, PSCCH is preconfigured to only start at a first starting symbol within a slot. For example, LBT succeeds in slot N 201 with starting symbols 221 and 222 configured. Similarly, the following slot N+1 202 has starting symbols at symbol #0 (223) and #8 (not shown) configured. In this embodiment, only starting symbols 221 and 223 can be used for PSCCH. Starting symbol 222, which is not the first candidate starting symbol of the slot, can only be used for PSSCH. With only PSSCH transmission from starting symbols other than the 1^{st} starting symbol, the UE can configure multiple starting symbols within a slot to achieve an equivalent channel access ability for SL-U compared to the other RATs (e.g., WiFi and/or NR-U). Further, with only PSSCH (repetition) transmission allowed on the starting symbols other than the 1st starting symbol within a slot, UE complexity and power consumption are reduced due to the blind detection/decoding of PSCCH. The control indicator indicates the PSSCH in a past partial slot. The PSCCH, which is in the 1st starting symbol of the full slot, such as starting symbol 223, indicates the information and/or configuration of the PSSCH in both the past (partial) slot, such as slot N 201 from starting symbol 222, and the current (slot N+1 202) and/or the following full slot(s). In one embodiment, the PSCCH and PSSCH transmission on the second starting symbol is a TB different from the TB transmitted in the following full slot. In another embodiment, the PSCCH and PSSCH transmission on the second starting symbol is a repetition of a sub-set of the TB transmitted in the following full slot.

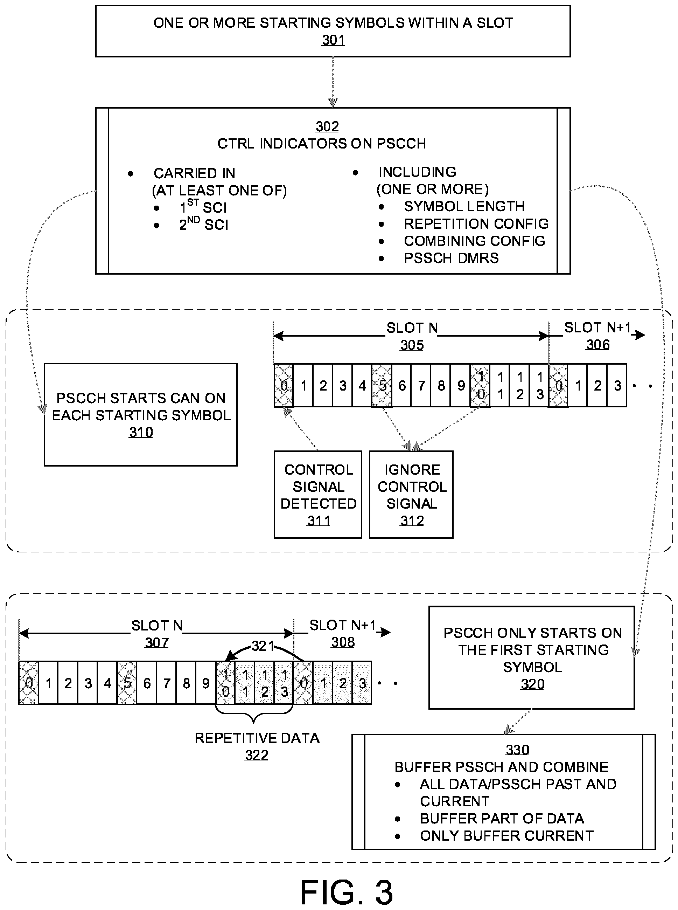

Figure 3 illustrates exemplary diagrams of starting symbol configurations and corresponding control indications in accordance with embodiments of the current invention. At step 301, the UE determines one or more starting symbols within a slot. In one embodiment, one or two starting symbols are configured. In one embodiment 302, control indicator indicates corresponding PSSCH according to the configuration for the starting symbols. In one embodiment, the control indicator is carried in a 1^{st} sidelink control indicator (SCI) and/or 2^{nd} SCI. For example, the configuration of the PSSCH(s) in partial and/or one and/or multiple slot(s) can be indicated with additional bit (s) (in the reserved bit) of 1^{st} SCI and/or 2^{nd} SCI separately. Alternatively, it can be indicated by both 1^{st} SCI and 2^{nd} SCI. For example, one additional bit in the 1^{st} SCI can be used to indicate whether the current control is used to indicate only the PSSCH in the current slot or the PSSCH(s) in both the current slot and the past (partial) slot. For the latter case, the indication of the other configurations of the PSSCH(s) is carried and can be found in the 2^{nd} SCI. A bitmap, and/or a table can be (pre-)configured and/or indicated to show the PSSCH(s) configurations.

In one embodiment, the control indicator and/or the configuration include one or more elements comprising the starting position/offset of the symbol, and/or the starting symbols, and/or symbol length, and/or the configuration of automatic gain control (AGC), repetition, combining, and demodulation reference signal (DMRS). For example, the starting symbols can be indicated for AGC/combining purpose.

In one embodiment 310, the UE configured with PSCCH can start on any candidate starting symbol. In one embodiment, the UE ignores control signals on a candidate starting symbol in a time slot when the UE detects and decodes a control signal in the time slot in another candidate starting symbol of the time slot. In one embodiment, when more than one candidate starting symbols within a slot are (pre)configured, the control signal/channel can be (pre)configured to be sent at multiple fixed symbols and/or at each starting symbols. For example, slot N 305 and slot N+1 306 are two consecutive slots for a SL resource. More than one candidate starting symbols, such as symbol #0, #5, and #10, are configured. When the control indicator indicates that PSCCH can start on any candidate starting symbol, the UE can be configured to monitor each starting symbol within a slot. When the UE is (pre-)configured to monitor more than one starting symbol, such as symbols #0, #5, and #10, the UE only decodes (the first) M control signal(s) in one slot as (pre-)configuration. For example, the UE can be (pre-)configured to only decode one control signal in each starting symbol. At step 311, the UE detects control signal. At step 312, the UE ignores possible control signals at symbols #5 and #10.

In one embodiment 320, the UE is configured with PSCCH can only on the first candidate starting symbol of a slot. The control indicator indicates the PSSCH in a past partial slot. For example, slot N 307 and slot N+1 308 are two consecutive slots for a SL resource. More than one candidate starting symbols, such as symbol #0, #5, and #10, are configured. When the PSCCH is configured to be only start on the first candidate starting symbol, only symbol #0 carries PSCCH. In one example, PSCCH starts on symbol #0 of slot N+1 308. In one embodiment 321, PSCCH from slot N+1 308 indicates past partial slot, which is symbols #10 to #13 of slot N 307. In one embodiment 322, repetitive data is transmitted on the past partial slot.

In one embodiment 330, the UE is (pre)configured with one or more additional PSSCH elements comprising whether to buffer PSSCH, how many PSSCH to be buffered in the past partial slot. The additional PSSCH elements are determined based on one or more factors including UE capability, UE capability report, and UE implementation. In one embodiment, the UE buffers down all the data/PSSCH in both past (partial) slot and current full slot to gain an optimal combining performance. In another embodiment, the UE buffers down a part of the data/ PSSCH in the past (partial) slot and all data/PSSCH in current full slot to achieve a trade-off between performance and buffer storage. In yet another embodiment, the UE buffers down only the PSSCH in current full slot to achieve low buffer.

In one novel aspect, for the PSCCH/PSSCH channel structure design, one sub-channel can be used as the granularity of frequency domain. For interlace based transmission, one sub-channel equals K interlace(s) within one RB set for interlace RB-based transmission, where K is (pre)configured. For contiguous based transmission, one sub-channel equals N continuous RB within one RB set for contiguous RB-based transmission. In one embodiment, N is (pre)configured.

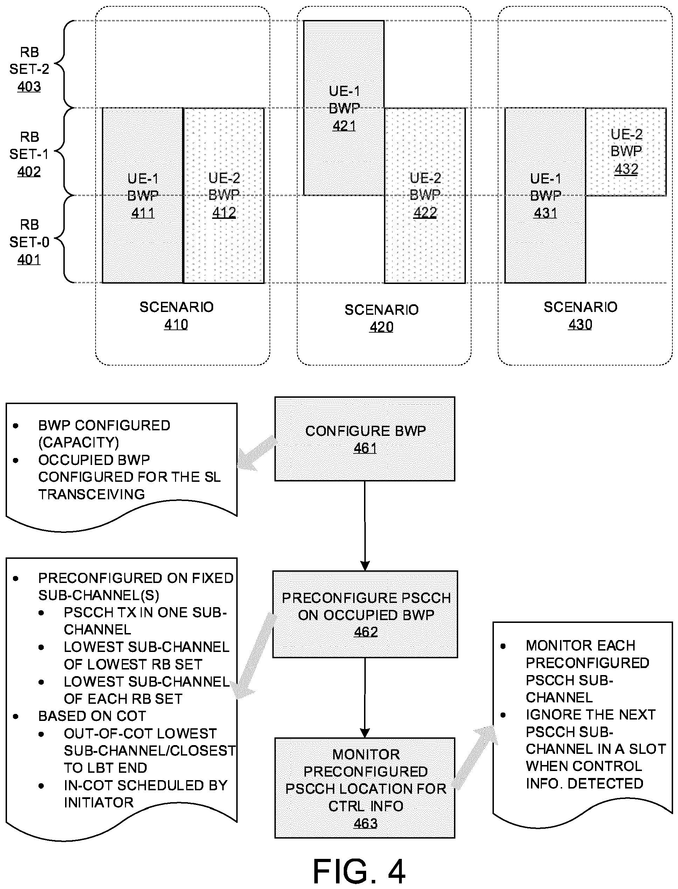

Figure 4 illustrates exemplary diagrams sub-channel and RB set configuration for PSCCH for a UE configured with occupied BWP for SL-U transceiving in accordance with embodiments of the current invention. In one embodiment, the UE is configured with a bandwidth part (BWP) for the SL transceiving in SL-U. In one embodiment, the BWP is configured by the network. The UE receives BWP configuration from the network and determines the BWP accordingly. In another embodiment, the UE determines the BWP. As an example, UE-1 establishes SL connection with UE-2. The SL BWP has three resource block (RB) sets, RB set-0 401, RB set-1 402, RB set-2 403. In scenario 410, UE-1 and UE-2 each is configured with occupied BWP of UE-1 BWP 411, and UE-2 BWP 412, respectively. BWP 411 and BWP 412 both occupies RB set-0 401 and RB set-1 402. When UE-1 and UE-2 both configured with the same PSCCH sub-channel configuration, UE-1 and UE-2 can detects the PSCCH. In scenario 420, UE-1 and UE-2 each is configured with occupied BWP of UE-1 BWP 421, and UE-2 BWP 422, respectively. BWP 421 occupies RB set-1 402 and RB set-2 403. BWP 422 occupies RB set-0 401 and RB set-1 402. When UE-1 and UE-2 both configured with the same PSCCH sub-channel configuration, UE-1 and UE-2 may not be able to detect PSCCH of the other UE. Similarly, in scenario 430, UE-1 and UE-2 each is configured with occupied BWP of UE-1 BWP 431, and UE-2 BWP 432, respectively. BWP 431 occupies RB set-0 401 and RB set-1 402. BWP 432 occupies RB set-1 402. When UE-1 and UE-2 both configured with the same PSCCH sub-channel configuration, UE-1 and UE-2 may not be able to detect PSCCH of the other UE.

In one novel aspect, the UE transmits the PSCCH at one or more preconfigured locations based on an occupied BWP configuration, wherein a subset or a whole RB sets of the configured BWP is occupied by the UE. In one embodiment, PSCCH should be transmitted within one fixed sub-channel. For example, for the case where Tx UE uses multiple RB sets, PSCCH can be transmitted within 1 fixed sub-channel (e.g., the 1^{st}/lowest sub-channel) of one RB set (e.g., the 1^{st}/lowest RB set) of the occupied multiple RB sets, and/or PSCCH can be transmitted within 1 fixed sub-channel (e.g., the 1^{st}/lowest sub-channel) of each RB set of the occupied bandwidth. Besides, PSCCH should be located in the sub-channel with the lowest index of the sub-channel(s) of the corresponding PSSCH. In one embodiment, the PSCCH is transmitted on a lowest subchannel of each RB set of the corresponding PSSCH. In another embodiment, the PSCCH is transmitted on a lowest subchannel of a lowest RB set of the corresponding PSSCH. At step 461, the UE configures a BWP for a SL transceiving on SL-U, wherein the BWP is configured with one or more RB sets each with multiple subchannels. The BWP is configured based on UE capability. The occupied BWP is further based on the configuration for the SL transceiving. At step 462, the UE prepares/preconfigures PSCCH transmission on one or more RB sets to communicate with a second UE through an SL connection. In one embodiment, the PSCCH is transmitted on a fixed sub-channel of each occupied RB set of the one or more RB sets. In one embodiment, the PSCCH is transmitted on the lowest subchannel of each RB set. In one embodiment, the PSCCH is transmitted on a fixed subchannel of one preconfigured RB set. In one embodiment, the preconfigured RB set is the lowest RB set occupied by the UE. In another embodiment, the one or more preconfigured positions are further determined based on COT. For example, for out-of-COT operation and/or for the transmission immediately after and/or closest to the LBT end, the PSSCH should start from the 1^{st}/lowest sub-channel of the occupied (overall) bandwidth. For in-COT operation, the PSSCH can be scheduled (e.g., by COT initiator) to start from the 1^{st}/lowest sub-channel of the indicated/scheduled/allocated bandwidth. In one embodiment, the PSCCH starts from a sub-channel of one RB set or across multiple RB sets of the corresponding PSSCH scheduled by a COT initiator UE. At step 463, the UE monitors the preconfigured PSCCH location for control information. In one embodiment, UE can detect a PSCCH based on the PSCCH location regarding the corresponding PSSCH. In one embodiment, the UE ignores subsequent PSCCH locations when a PSCCH is detected.

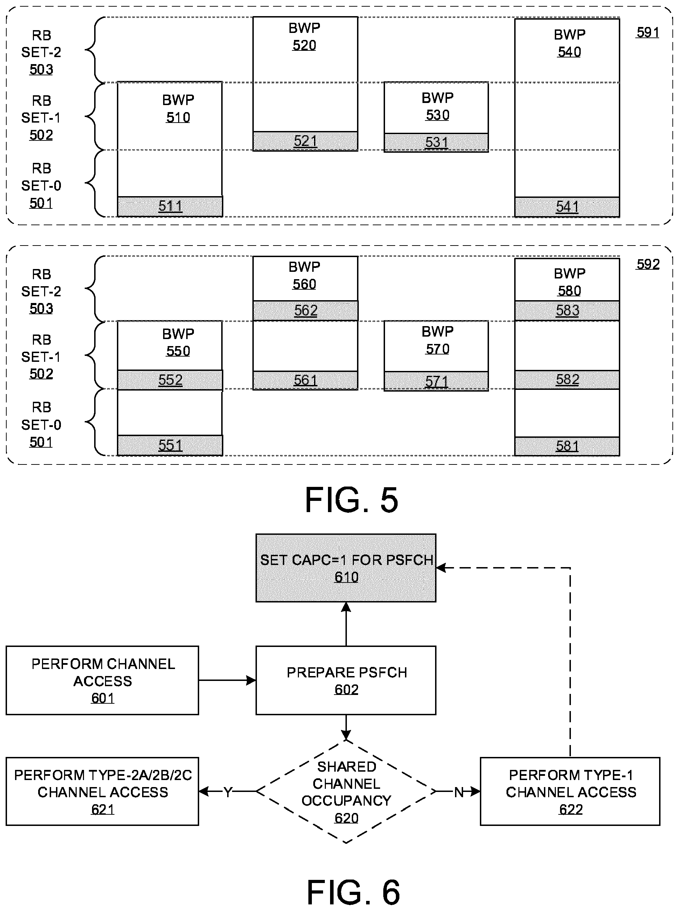

Figure 5 illustrates exemplary diagrams PSCCH configuration with one or more RB sets in an occupied BWP for the UE for the SL-U transceiving in accordance with embodiments of the current invention. As an example, the SL-U bandwidth is configured with three RB sets, RB set-0 501, RB set-1 502, and RB set-2 503. In one embodiment 591, the PSCCH is transmitted on a fixed subchannel one preconfigured RB set, and wherein preconfigured RB set is a lowest RB set occupied by the UE. As an example, the UE with occupied BWP 510 occupies RB set-0 501 and RB set-1 502, with the PSCCH configured at sub-channel 511, which is the lowest subchannel of the lowest RB of BWP 510. Similarly, UE with occupied BWP 520 occupies RB set-1 502 and RB set-2 503, with the PSCCH configured at sub-channel 521, which is the lowest subchannel of the lowest RB of BWP 520. UE with occupied BWP 530 occupies RB set-1 502, with the PSCCH configured at sub-channel 531, which is the lowest subchannel of the lowest RB of BWP 530. UE with occupied BWP 540 occupies RB set-0 501, RB set-1 502, RB set-2 503, with the PSCCH configured at sub-channel 541, which is the lowest subchannel of the lowest RB of BWP 540.

In one embodiment 592, the PSCCH is transmitted on a fixed subchannel each of occupied RB set of the one or more RB sets. In one embodiment, the fixed subchannel is the lowest subchannel of the RB set. As an example, the UE with occupied BWP 550 occupies RB set-0 501 and RB set-1 502, with the PSCCH configured at sub-channel 551 and 552. Similarly, UE with occupied BWP 560 occupies RB set-1 502 and RB set-2 503, with the PSCCH configured at sub-channel 561 and 562. UE with occupied BWP 570 occupies RB set-1 502, with the PSCCH configured at sub-channel 571. UE with occupied BWP 580 occupies RB set-0 501, RB set-1 502, RB set-2 503, with the PSCCH configured at sub-channel 581, 582, and 583.

Figure 6 illustrates an exemplary diagram for the PSFCH configuration for SL-U transceiving in accordance with embodiments of the current invention. In one novel aspect, the UE establishes SL connection on SL-U, performs channel access before transmitting a PSFCH, configures a channel access priority class (CPAC) value for the PSFCH to be one and transmits the PSFCH upon success of the channel access. For the transmission of PSFCH, it can be (pre)configured a Type-1 channel access procedure should be performed without shared channel occupancy and Type-2 channel access procedure should be performed in a shared channel occupancy. In one embodiment, the CAPC value for PSFCH can be set as '1'. In another embodiment, the CPAC is set to be same as the corresponding PSSCH based on the (pre)configuration. At step 601, the UE performs channel access. At step 602, upon the success of channel access, the UE prepares PSFCH transmission. In one embodiment 610, the CAPC value is set to be '1'. At step 620, the UE determines if it is shared channel occupancy. If step 620 determines no, the UE performs type-1 channel access. In one embodiment, when UE performs type-1 channel access for PSFCH, the CAPC for the PSFCH is set to be '1'. If step 620 determines yes, the UE performs one of type-2A/2B/2C/ channel access. In another embodiment, for the transmission of S-SSB in SL-U, it can be (pre)configured that the S-SSB can be transmitted without sensing the channel.

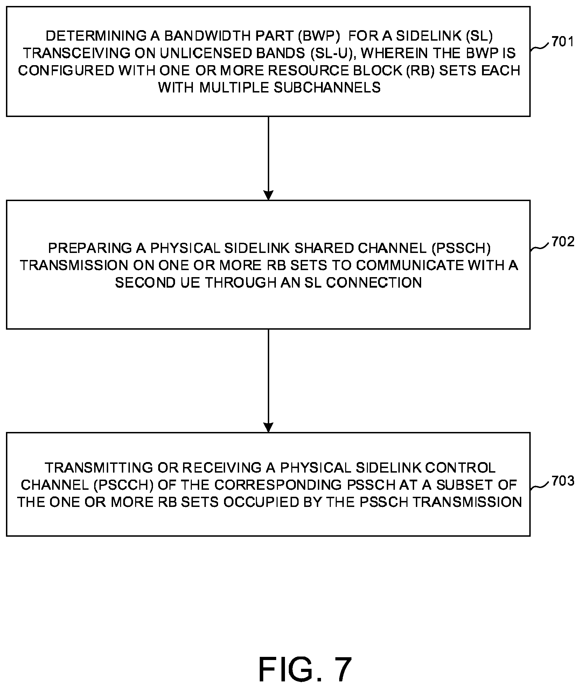

Figure 7 illustrates an exemplary flow chart for the UE configuring PSCCH with occupied BWP for the SL-U transceiving in accordance with embodiments of the current invention. At step 701, the UE determines a bandwidth part (BWP) for a sidelink (SL) transceiving on unlicensed bands (SL-U), wherein the BWP is configured with one or more resource block (RB) sets each with multiple subchannels. At step 702, the UE prepares a physical sidelink shared channel (PSSCH) transmission on one or more RB sets to communicate with a second UE through an SL connection. At step 703, the UE transmits or receives a physical sidelink control channel (PSCCH) of the corresponding PSSCH at a subset of the one or more RB sets occupied by the PSSCH transmission.

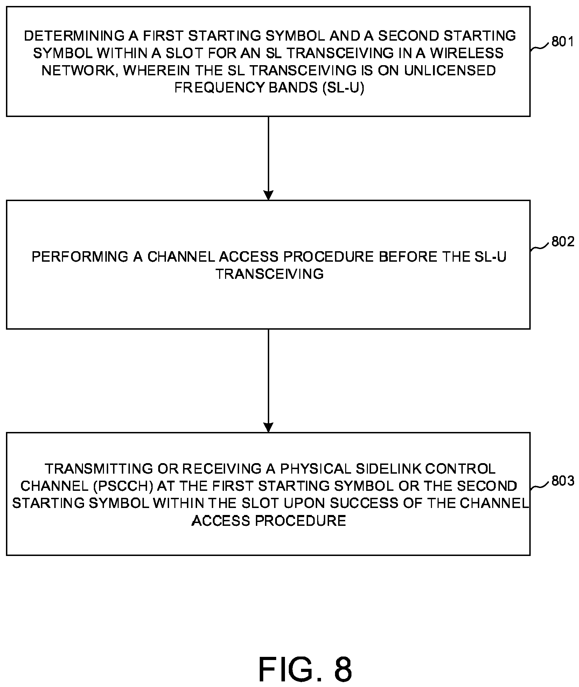

Figure 8 illustrates an exemplary flow chart for UE configuring PSSCH with multiple starting symbols for the SL-U transceiving in accordance with embodiments of the current invention. At step 801, the UE determines a first starting symbol and a second starting symbol within a slot for an SL transceiving in a wireless network, wherein the SL transceiving is on unlicensed frequency bands (SL-U). At step 802, the UE performs a channel access procedure before the SL-U transceiving. At step 803, the UE transmits or receives a physical sidelink control channel (PSCCH) at the first starting symbol or the second starting symbol within the slot upon success of the channel access procedure.

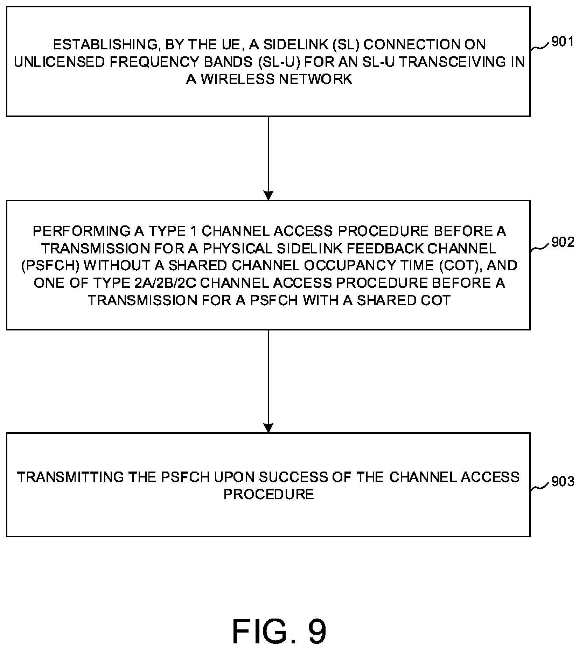

Figure 9 illustrates an exemplary flow chart for the UE configuring PSFCH for the SL-U transceiving in accordance with embodiments of the current inventions. At step 901, the UE establishes a sidelink (SL) connection on unlicensed frequency bands (SL-U) for an SL-U transceiving in a wireless network. At step 902, the UE performs a Type 1 channel access procedure before a transmission for a physical sidelink feedback channel (PSFCH) without a shared channel occupancy time (COT), and one of Type 2A/2B/2C channel access procedure before a transmission for a PSFCH with a shared COT. At step 903, the UE transmits the PSFCH upon success of the channel access procedure.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment (111-115), UE, comprising:
determining (701) a bandwidth part, BWP, for a sidelink, SL, transceiving on unlicensed bands, SL-U, wherein the BWP is configured with one or more resource block, RB, sets each with multiple subchannels;
preparing (702) a physical sidelink shared channel, PSSCH, transmission on one or more RB sets to communicate with a second UE through an SL connection; and
transmitting or receiving (703) a physical sidelink control channel, PSCCH, of the corresponding PSSCH at a subset of the one or more RB sets occupied by the PSSCH transmission.

2. The method of claim 1, wherein the PSCCH is transmitted on a lowest subchannel of each RB set of the corresponding PSSCH, or the PSCCH is transmitted on a lowest subchannel of a lowest RB set of the corresponding PSSCH.

3. The method of claim 1, further comprising:
detecting a PSCCH by the UE (111-115) based on the PSCCH location regarding the corresponding PSSCH.

4. The method of claim 1, wherein one or more positions for PSCCH are further determined based on a channel occupancy time, COT, indication, wherein the PSCCH is for an in-COT operation, and the PSCCH starts from a sub-channel of one RB set or across multiple RB sets of the corresponding PSSCH scheduled by a COT initiator UE.

5. A method for a user equipment (111-115), UE, comprising:
determining (801) a first starting symbol and a second starting symbol within a slot for an SL transceiving in a wireless network, wherein the SL transceiving is on unlicensed frequency bands, SL-U;
performing (802) a channel access procedure before the SL-U transceiving; and
transmitting or receiving (803) a physical sidelink control channel, PSCCH, at the first starting symbol or the second starting symbol within the slot upon success of the channel access procedure.

6. The method of claim 5, wherein transmitting the PSCCH on the first starting symbol within the slot, and the SL transceiving on the first starting symbol further includes a physical sidelink shared channel, PSSCH, transmission.

7. The method of claim 5, wherein the SL transceiving on the second starting symbol within the slot includes the PSCCH and a PSSCH transmission.

8. The method of claim 5, wherein the SL transceiving on the second starting symbol within the slot includes a PSSCH transmission only.

9. The method of claim 5, wherein the PSCCH and a PSSCH transmission on the second starting symbol is a TB different from the TB transmitted in the following full slot, or the PSCCH and the PSSCH transmission on the second starting symbol is a repetition of a sub-set of the TB transmitted in the following full slot.

10. The method of claim 5, wherein the PSCCH is preconfigured to include a control indicator, the control indicator indicates the PSSCH in a partial slot where the channel access procedure is finished.

11. The method of claim 5, wherein the PSCCH is preconfigured to include a control indicator, the control indicator indicates the PSSCH in both a partial slot where the channel access procedure is finished and the PSSCH in a following full slot.

12. The method of claim 5, wherein at least one starting symbol is used for automatic gain control, AGC, purpose.

13. The method of claim 5, wherein the UE (111-115) monitors each starting symbol within the slot for PSCCH detection, or the UE (111-115) stops monitoring following starting symbols in a slot upon successful detecting a former PSCCH within the slot.

14. A method for a user equipment (111-115), UE, comprising:
establishing (901), by the UE, a sidelink, SL, connection on unlicensed frequency bands, SL-U, for an SL-U transceiving in a wireless network;
performing (902) a Type 1 channel access procedure before a transmission for a physical sidelink feedback channel, PSFCH, without a shared channel occupancy time, COT, and one of Type 2A/2B/2C channel access procedure before a transmission for a PSFCH with a shared COT; and
transmitting (903) the PSFCH upon success of the channel access procedure.

15. The method of claim 14, wherein a channel access priority class, CAPC, for Type 1 channel access is configured as 1.
